# EUROPÄISCHE PATENTSCHRIFT

(11) **EP 0 923 707 B1**
(45) Veröffentlichungstag und Bekanntmachung des Hinweises auf die Patenterteilung: **13.03.2002**
(21) Anmeldenummer: 97941829.0
(22) Anmeldetag: 27.08.1997
(51) Int. Cl.: G01C 9/06, G21C 19/317, B01J 12/00, B01J 35/00, B01J 35/02

(54) **KATALYSATORSYSTEM UND REKOMBINATIONSEINRICHTUNG ZUR REKOMBINATION VON WASSERSTOFF UND SAUERSTOFF, INSBESONDERE FÜR EIN KERNKRAFTWERK**
CATALYST SYSTEM AND RECOMBINATION DEVICE FOR RECOMBINING HYDROGEN AND OXYGEN, IN PARTICULAR FOR A NUCLEAR POWER STATION
SYSTEME CATALYSEUR ET DISPOSITIF DE RECOMBINAISON POUR LA RECOMBINAISON D'HYDROGENE ET D'OXYGENE, EN PARTICULIER POUR CENTRALE NUCLEAIRE

(30) Priorität: 09.09.1996 DE 19636557
(43) Veröffentlichungstag der Anmeldung: 23.06.1999
(73) Patentinhaber: Framatome ANP GmbH, 91050 Erlangen (DE)
(72) Erfinder: ECKARDT, Bernd, D-63486 Bruchköbel (DE); HILL, Axel, D-64589 Stockstadt (DE)
(74) Vertreter: Tergau & Pohl Patentanwälte
(86) Internationale Anmeldenummer: DE9701860
(87) Internationale Veröffentlichungsnummer: WO9811406

(56) Entgegenhaltungen:
- EP-A- 0 622 107
- DE-A- 4 015 228
- DE-C- 4 428 956

## Beschreibung

Die Erfindung bezieht sich auf ein Katalysatorsystem und eine Rekombinationseinrichtung zur Rekombination von Wasserstoff und/oder Kohlenmonoxid mit Sauerstoff mit einem metallischen Trägerblech, das mit katalytischem Edelmetall beschichtet ist, insbesondere für ein Kernkraftwerk. Weiterhin bezieht sie sich auf ein Verfahren zum Betrieb eines solchen Katalysatorsystems und einer solchen Rekombinationseinrichtung

Nach einem Störfall mit Kühlmittelverlust können in einem Kernkraftwerk große Mengen Wasserstoff und Kohlenmonoxid in den Sicherheitsbehälter (Containment) freigesetzt werden. Ohne Gegenmaßnahme ist die Anreicherung an Wasserstoff in der Atmosphäre des Sicherheitsbehälters so weit möglich, daß sich ein detonationsfähiges Gemisch ausbilden kann. Bei einer späten zufälligen Zündung könnte vor allem durch die Verbrennung einer größeren Menge an Wasserstoff die Integrität des Sicherheitsbehälters gefährdet werden.

Angesichts dieser Sicherheitsüberlegungen ist es angebracht, zur Beseitigung des Wasserstoffs und des Kohlenmonoxids aus der Atmosphäre des Sicherheitsbehälters mittels Rekombination mit Sauerstoff eine früh startende Rekombinationseinrichtung zu entwickeln. Diese Einrichtung soll auch bei längerer Standzeit in der Atmosphäre des Sicherheitsbehälters nicht wesentlich an Aktivität verlieren, und sie soll in der Lage sein, völlig passiv bei niedrigen Umgebungstemperaturen zu starten. Denn die Einrichtung soll auch bei Störfällen mit niedrigen Umgebungstemperaturen, die z.B. bei TMI-Störfallsituationen oder durch Betrieb der Lüftung mit resultierenden Umgebungstemperaturen von nur 30° C und weniger auftreten können, eingesetzt werden. Durch eine solche Rekombinationseinrichtung, die eine Anzahl von besonders ausgebildeten Katalysatorsystemen enthalten muß, kann die Sicherheit eines Kernkraftwerks entscheidend erhöht werden, da ein rechtzeitiger passiver Abbau des Wasserstoffs möglich ist.

Aus der EP 0 527 968 B1 ist eine Rekombinationseinrichtung bekannt, bei der eine Anzahl von Katalysatorsystemen in Form von ebenen Platten, die beidseitig mit Katalysatormaterial wie Platin und/oder Palladium beschichtet sind, vorgesehen ist. Diese eignet sich besonders gut für den Wasserstoffabbau in der Atmosphäre des Sicherheitsbehälters eines Kernkraftwerks. Jedes Katalysatorsystem umfaßt dabei ein Trägerblech aus Edelstahl, das beidseitig eine dünne Schicht, deren Dicke im Mikrometerbereich liegt, aus insbesondere Platin und/oder Palladium aufweist. Eine Vielzahl solcher beschichteter Einzelplatten ist in einem Gehäuse, das als Modul aufgebaut sein kann, angeordnet. Das Gehäuse wird von unten mit dem zu überwachenden Gasstrom beströmt, und dieser Gasstrom verläßt das Gehäuse im oberen Bereich durch eine seitlich angebrachte Austrittsöffnung.

Festzuhalten ist, daß hier jeweils das Edelstahlblech auf jeder Seite vollständig mit einer monometallischen Beschichtung versehen ist. Diese Rekombinationseinrichtung wurde insbesondere für den Einsatz bei schweren Störfällen vorgesehen, bei denen mit Temperaturen von mehr als 50° C in der Atmosphäre des Sicherheitsbehälters gerechnnet werden muß.

Im Stand der Technik sind weiterhin für den Zweck der Rekombination diverse Edelmetallmischungen beschrieben worden (DE 36 04 416 C1, EP 0 301 536 A2).

Die im Stand der Technik bekannten Einrichtungen zur Rekombination können zwecks Vermeidung von Desaktivierung noch zusätzlich mit Filtern ausgestattet oder auch in geschlossenen Behältern gelagert sein, die im Anforderungsfall geöffnet werden. Solche Zusatzeinrichtungen vermeiden oder reduzieren zwar die Katalystatoralterung, sie sind jedoch kostenintensiv, kompliziert und nur schwierig gegen andere Anforderungen, wie z.B. Erdbeben, auszulegen.

Aufgabe der vorliegenden Erfindung ist es, ein Katalysatorsystem sowie eine darauf beruhende Rekombinationseinrichtung anzugeben, mit der es möglich ist, in einem Gasstrom, insbesondere in einem Kernkraftwerk, z.B. nacheinander verschiedene Eigenschaften zur Wirkung zu bringen. Auch soll ein Verfahren zum Betrieb eines solchen Systems bzw. einer solchen Einrichtung angegeben werden. Ausgestaltungen sollen sich dann insbesondere auf das Anspringen bei niedriger Temperatur sowie auf Gift- und Hochtemperaturresistenz beziehen.

Bezüglich des Katalysatorsystems wird die genannte Aufgabe erfindungsgemäß dadurch gelöst, daß das Trägerblech gut wärmeleitend ausgebildet sowie in einer ersten Zone mit einem ersten katalytischen Edelmetall und in einer zweiten Zone mit einem zweiten katalytischen Edelmetall beschichtet ist, wobei die erste und die zweite Zone bevorzugt auf derselben Seite des Trägerblechs liegen. Zu beachten ist, daß das Trägerblech hierbei eine geringe Masse und damit eine geringe Wärmekapazität besitzen sollte.

Hierbei werden also in einer Kombinationseinrichtung die Eigenschaften des ersten und des zweiten katalytischen Edelmetalls, bevorzugt nacheinander, ausgenutzt.

Mit Vorzug kann ein zweites Edelmetall ausgesucht sein, das eine niedrigere Reaktionstemperatur und/oder eine höhere katalytische Aktivität besitzt als das erste Edelmetall; es sollte auch in hoher Konzentration vorliegen. Dann wirkt die zweite Zone sozusagen als eine Initialzone für die Einleitung der Rekombination. Bevorzugt kann auch ein erstes Edelmetall ausgesucht sein, das giftresistenter ist als das zweite Edelmetall. Dann ist das Katalysatorsystem immer noch wirksam, wenn das zweite Edelmetall infolge des Katalysatorgifts bereits inaktiv geworden ist.

Von Bedeutung ist eine Ausführungsform, bei der das erste Edelmetall Platin und das zweite Edelmetall vorzugsweise Palladium ist.

Das Platin wurde hier vor allem wegen seiner guten Temperaturbeständigkeit und Resistenz gegen Katalysatorgifte ausgewählt und qualifiziert. Weiterhin kann mit dem Platin als erstem katalytischem Edelmetall neben Wasserstoff auch Kohlenmonoxid (zu Kohlendioxid) rekombiniert werden. Das ebenfalls für die Wasserstoff-Rekombination geeignete Palladium besitzt eine geringere Stabilität gegen Katalysatorgifte. Daher und weil es reversibel durch Kohlenmonoxid vergiftet wird, sollte es nicht zur großflächigen Beschichtung des Trägerblechs eingesetzt werden. Vorteil des Palladiums gegenüber dem Platin ist jedoch seine Eigenschaft, bei geringeren Umgebungstemperaturen anzuspringen. Man kann also sagen, daß ein multimetallisches Katalysatorsystem mit Platin und Palladium bei wesentlich geringeren Umgebungstemperaturen und Wasserstoff-Konzentrationen, nämlich bei weniger als 30° C und bei weniger als 2 Vol.-% Wasserstoff, anspringt. Die spezielle Anordnung von Platin und Palladium auf einem Trägerblech mit geringer Masse in dem Katalysatorsystem führt zu einer sich gegenseitig positiv beeinflussenden Situation, so daß spezielle chemische und technologische Anforderungen für den Einsatz in einem Kernkraftwerk von einem solch bifunktionellen System ausgezeichnet erfüllt werden können. Diese Anforderungen laufen auf ein frühes Anspringen bei niedrigen Wasserstoff-Konzentrationen bei gleichzeitig hoher Temperatur- und Giftresistenz hinaus.

Nach einer Weiterbildung ist vorgesehen, daß das Trägerblech mit einer weiteren katalytischen Schicht versehen ist, die insbesondere Kupfer (Cu) oder Kupferoxid (CuO) umfaßt. Durch das Anbringen dieser weiteren katalytischen Schicht kann die Kohlenstoffmonoxid-Rekombination bei niedrigen Temperaturen zusätzlich verbessert werden.

Bevorzugt besteht das Trägerblech aus einem nicht rostenden Edelstahl, und zwar mit einer Blechdicke von weniger oder gleich 0,2 mm. Und das erste und/oder das zweite katalytische Edelmetall ist bevorzugt mit Hilfe einer Haftvermittlerschicht und/oder einer Zwischenschicht auf dem Trägerblech aufgetragen. Einzelheiten hierzu gehen aus der EP 0 527 968 B1 hervor. Das Trägerblech sollte eine geringe Masse und damit eine geringe Wärmekapazität besitzen.

Von Bedeutung ist auch, daß man die erste geschlossene Zone viel größer als die zweite geschlossene Zone wählt. Auf diese Weise können die Eigenschaften des ersten katalytischen Edelmetalls bei der Funktion besonders hervorgehoben werden. Bei einer Ausführungsform, in der insbesondere Platin und Palladium verwendet wird, ist demgemäß vorgesehen, daß die aufgebrachte Masse des ersten Edelmetalls mehr als 75% der aufgebrachten Masse des zweiten Edelmetalls ist. Durch die auf dem Trägerblech lokal aufgebrachte Palladium-Dotierung in hoher Dichte (Palladium-Masse, wie erwähnt, 25% der Platin-Gesamt-Masse) wird es möglich, die positiven katalytischen Eigenschaften des Platins und des Palladiums so zu kombinieren, daß ein bifunktionelles Katalysatorsystem mit wesentlich besseren Eigenschaften als denen der beiden einzelnen Edelmetalle entsteht.

Für eine einfache Handhabung ist vorgesehen, daß das Trägerblech mit den aufgebrachten Schichten aus erstem und zweitem Edelmetall als ebene Platte ausgebildet ist.

Für die Rekombination wird das vorangehend beschriebene Katalysatorsystem einem Gasstrom, der Wasserstoff und/oder Kohlenmonoxid sowie Sauerstoff enthält, ausgesetzt. Die Anordnung ist dann so getroffen, daß das erste Edelmetall in einer ersten Zone, die dem Gasstrom zugewandt ist, und das zweite Edelmetall in einer zweiten Zone, die dem Gasstrom abgewandt ist, auf dem Trägerblech aufgebracht ist. Bezüglich der Verwendung von Platin und Palladium kann man dies so ausdrücken: in vorteilhafter Weise erfolgt die Konzentration des sensitiven Palladium-Edelmetalls in dem der Strömungsrichtung zugewandten Teil, während das giftresistente Platin-Edelmetall-vorwiegend nicht als Edelmetallmischung - auf demselben metallischen dünnen Trägerblech auf dem der Strömungsrichtung nachgeordneten Teil konzentriert ist. Durch die hohe mikroskopische Dichte der aktiven Palladium-Zentren gelingt es, in dieser Zone - noch verbessert bei Verwendung eines Trägerblechs geringer Masse (Wärmekapazität) - eine sich selbst unterstützende katalytische Reaktion in Gang zu bringen. Diese kann unterstützt werden durch eine metallische Leitung, beispielsweise durch eine Halterung mit gutem Wärmeleitungsvermögen, so daß die bei der Initial-Rekombination entstehende Wärme in die reine Platin-Zone transportiert wird und hier einen Reaktionsbeginn ermöglicht. Durch diese Kombination können "Alterungseffekte" (aging effects) - hervorgerufen durch den Einsatz in der Kernkraftwerks-Atmosphäre, wie z.B. durch Sorption von Kohlenwasserstoffen und Schweißdämpfen, Aerosolbeladung usw. - ohne den sonst nach kurzer Stand-by-Zeit auftretenden Verlust der sicherheitswichtigen Selbststarterfunktion - über lange Betriebsräume von vielen Jahren (beispielsweise fünf oder gar zehn Jahren) kompensiert werden. Somit wird die Sicherheit entscheidend erhöht, und gleichzeitig werden die Kosten klein gehalten, da ein zyklischer Austausch der Katalysatorsysteme vermieden wird.

Die zweite Zone kann insbesondere ein Streifen sein, der etwa 5 bis 20%, insbesondere weniger als 10%, der Fläche der ersten Zone ausmacht.

Um eine optimale Ausnutzung des Trägerblechs zu erreichen, sind die Vorderseite und die Rückseite dieses Trägerblechs in gleicher Weise beschichtet.

Nach einer weiteren vorteilhaften Ausgestaltung ist vorgesehen, daß eine Teflonbeschichtung auf der zweiten Zone vorgesehen ist. Die Frühstartfähigkeit, insbesondere bei feuchten Umgebungsbedingungen, kann durch eine solche limitierte Teflonbeschichtung zur Erzeugung zeitweiliger hydrophober Eigenschaften des Palladium-dotierten Streifens erfolgen. Das Beschichten mit Teflon geht jedoch bei hohen Temperaturen von über 200 bis 300° C und bei hoher Strahlenbelastung verloren, und zwar unter Bildung von aktivitätsmindernden Abfallprodukten. Vorteilhafterweise erfolgt deshalb nur eine begrenzte Beschichtung des mit Palladium dotierten Streifens, so daß insgesamt nur weniger als 10% Beschichtung vorhanden sind. Durch diese quantitative Begrenzung kann eine relevante Vergiftung vermieden werden, und aufgrund der beschriebenen Wärmeweiterleitungseigenschaften kann eine gleichzeitige weitere Verbesserung der Frühstarterfunktion erzielt werden.

Die zweitgenannte Aufgabe wird erfindungsgemäß durch eine Rekombinationseinrichtung gelöst, die gekennzeichnet ist durch mindestens ein Katalysatorsystem der voranstehend beschriebenen Art. Bevorzugt ist ein Gehäuse, beispielsweise auch ein Einschub, zur Aufnahme eines oder mehrerer Katalysatorsysteme der vorbeschriebenen Art vorgesehen.

Für die Praxis bedeutsam ist eine Ausführung, bei der mehrere gleichartige Katalysatorsysteme, insbesondere parallel zueinander, in einer Halterung mit gutem Wärmeleitungsvermögen festgehalten sind. Das Festhalten geschieht vorzugsweise in der zweiten Zone, in der sich das zweite katalytische Edelmetall befindet.

In einer Rekombinationseinrichtung wird man die Anordnung der einzelnen bevorzugt eben ausgebildeten Katalysatorsysteme form- und kraftschlüssig vornehmen, und zwar parallel zu einander in einem metallischen Träger oder der soeben erwähnten Halterung. Der Abstand der einzelnen Katalysatorsysteme voneinander sollte weniger als 2 cm betragen, vorzugsweise etwa 1 cm. Ein Einhalten des Abstandes zwischen den Katalysatorblechen auf den soeben genannten Werten ist wünschenswert, da aufgrund der laminaren Strömungszustände zwischen den Katalysatorblechen nur ein ungenügender Wärmeübertrag durch Konvektion gelingt. Die Wärme wird primär durch Strahlung übertragen. Durch die kraftschlüssige Verbindung mit mehr als 0,1 kp zwischen den dünnen Katalysatorblechen einerseits und dem Träger oder der Halterung andererseits erfolgt, nach Start eines Katalysatorsystems, eine direkte Wärmeweiterleitung in das Nachbarblech.

Um Kühleinflüsse durch die Umgebung gering zu halten, wird vorteilhafterweise eine Isolierung zwischen dem Katalysatorträger und einer Außenwand, beispielsweise in Form eines nicht durchströmten isolierenden Luftspalts von mehr als 5 mm, vorgesehen. Hierdurch werden auch die Außentemperaturen an der Rekombinator-Einrichtung entscheidend reduziert. Dadurch kann bei höheren Wasserstoff-Konzentrationen von z.B. 8 bis 10 Vol.-% eine Zündung vermieden werden. Dies liegt daran, daß die Außentemperatur Tₐ trotz hoher Reaktionstemperatur Tᵣ von beispielsweise 700° C außen unterhalb der Zündtemperatur Tᵣ von 520° C gehalten werden kann.

Im Vergleich zu bereits bekannten anderen Katalysatorsystemen kommt die vorliegende Rekombinationseinrichtung ohne Schutz- und/oder Aktivierungseinrichtungen aus.

Die hier beschriebene Rekombinationseinrichtung zur Rekombination von Wasserstoff und Kohlenmonoxid mit Sauerstoff zeichnet sich somit dadurch aus, daß gleichzeitig zwei katalytische Edelmetalle, vorzugsweise Platin und Palladium, auf einem gemeinsamen metallischen gut wärmeleitenden Trägerblech, und zwar konzentriert in verschiedenen Zonen, untergebracht sind. Unter Berücksichtigung der geringen Wärmekapazität (Masse) der Bleche und der günstigen Wärmeleiteigenschaften der Trägereinheit bzw. der Halterung werden - ohne weitere Zusatzeinrichtungen - die Funktionen a) Anspringen bei niedriger Temperatur, b) Giftresistenz und c) Hochtemperaturresistenz erfüllt.

Ausführungsbeispiele der Erfindung werden im folgenden anhand von zwei Figuren näher erläutert. Es zeigen:
- FIG 1: eine Rekombinationseinrichtung für Wasserstoff, die bei relativ niedrigen Temperaturen startet, und
- FIG 2: die parallele Anordnung mehrerer Katalysatorsysteme innerhalb einer solchen Rekombinationseinrichtung.

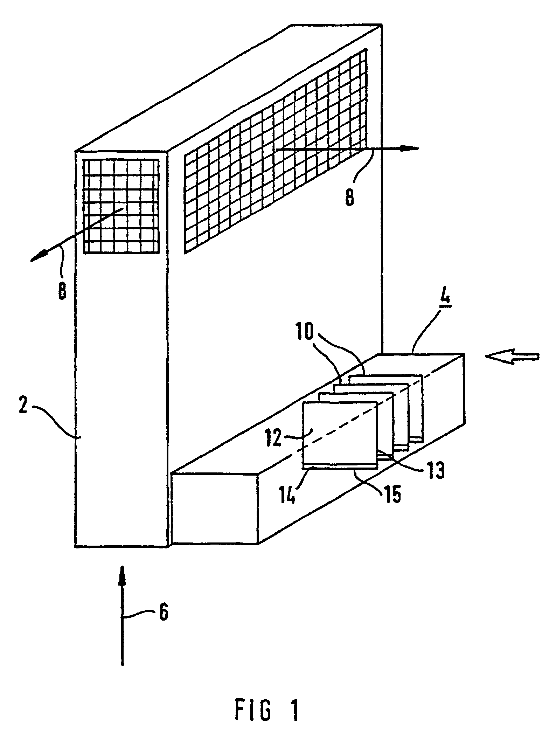

Die in Figur 1 dargestellte Rekombinationseinrichtung ist im geometrischen Aufbau aus der EP 0 527 968 B1 bekannt. Danach ist ein rechteckiger Kasten 2 vorgesehen, in dessen unteren Teil ein ausziehbarer Katalysator-Einschub 4 hineingeschoben werden kann. In Figur 1 ist die herausgezogene Stellung gezeigt. Der zu rekombinierende Gasstrom kann durch eine im Bodenbereich vorgesehene Einströmöffnung in den Kasten 2 eintreten, was durch einen Pfeil 6 angedeutet ist. Der Gasstrom verläßt den Kasten 2 im oberen Bereich durch seitliche Ausströmöffnungen, was durch Pfeile 8 verdeutlicht ist.

Der Einschub 4 enthält eine Vielzahl von oben einsteckbarer Katalysatorelemente oder Katalysatorsysteme 10. Diese sind parallel zueinander angeordnet, und zwar in einem Abstand von weniger oder gleich 2 cm, z.B. von 10 mm. Sowohl die Vorderseite als auch die Rückseite eines jeden Katalysatorsystems 10 ist in zwei Zonen aufgeteilt. Dabei ist eine obere erste Zone 12 mit einem ersten katalytischen Edelmetall 13 und eine untere schmälere zweite Zone 14 mit einem zweiten katalytischen Edelmetall 15 beschichtet. Beide Zonen 12, 14 sind durch Katalysatorbelegung auf einem dünnen (nicht im einzelnen dargestellten) Trägerblech aus einem gut wärmeleitenden Material, wie Edelstahl, gebildet. Die erste Zone 12 umfaßt etwa 90% der gesamten Fläche, und die zweite Zone 14, die im unteren Bereich als horizontaler Streifen ausgebildet ist, umfaßt etwa 10% der Gesamtfläche. Die erste Zone 12 ist bekannterweise mit dem eine vergleichsweise hohe Reaktionstemperatur aufweisenden, giftresistenten Platin als erstes Edelmetall 13 belegt, und die zweite Zone 14 ist mit dem eine vergleichsweise niedrige Reaktionstemperatur aufweisenden, nicht sonderlich giftresistenten Palladium als zweites Edelmetall 15 belegt. Die Belegung oder Beschichtung kann insbesondere derart sein, wie sie in der EP 0 527 968 B1 beschrieben ist. Die karteikastenförmige Anordnung der Katalysatorsysteme 10 ist durch eine form- und kraftschlüssige Fixierung gekennzeichnet.

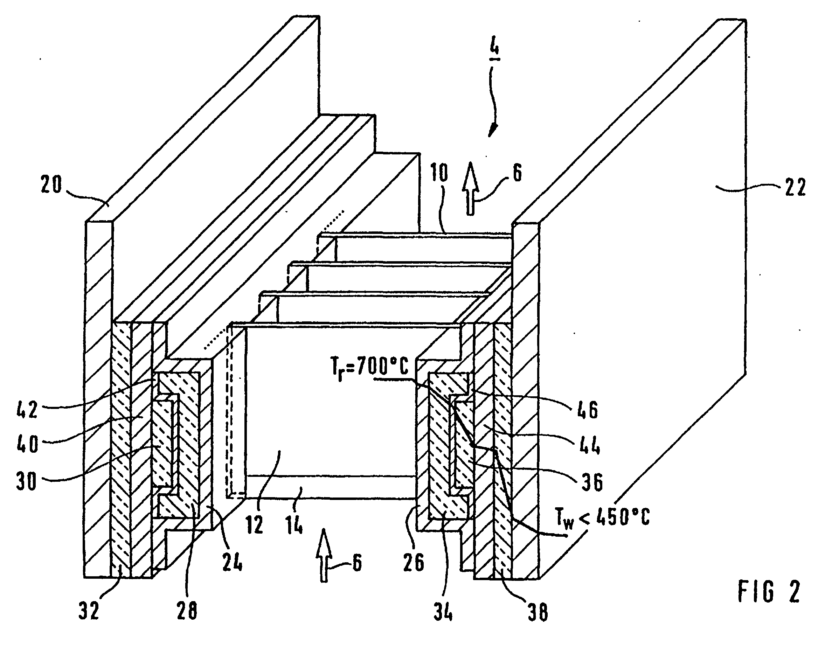

Nach Figur 2 besitzt der Einschub 4 zwei Seitenwände 20 und 22, zwischen denen die plattenförmigen Katalysatorsysteme 10 angeordnet sind. Diese Wände 20, 22 können aus Metall bestehen. Die kraft- und formschlüssige Befestigung ist mit Hilfe von Befestigungsblechen 24, 26 vorgenommen, die eine Halterung bilden. Diese können, wie dargestellt, ein U-Profil besitzen. Zwischen den Platten 24, 26 und den Wänden 20 bzw. 22 ist eine Isolierung vorgesehen. Im vorliegenden Fall sind aus Isolierstoff bestehende Isolierwände 28, 30, 32 bzw. 34, 36, 38 vorgesehen, die durch Halteplatten 40, 42 bzw. 44, 46 gehalten sind. Anstelle der Isolierstoff-Wände kann auch ein Isolier-Luftspalt (nicht dargestellt) verwendet werden. Durch solche Isolierung werden die Rekombinationseinrichtung-Außentemperaturen entscheidend reduziert. Denn die Außentemperatur an der Wand T_{w} kann trotz hoher Reaktionstemperatur Tᵣ von beispielsweise 700° C außen unterhalb der Zündtemperatur T_{z} von T_{z} = 500° C gehalten werden. Dies ist in einem Diagramm gleichfalls in Figur 2 dargestellt.

Als Katalysatorträger wird ein 0,05 mm starkes Tragblech aus einem hochtemperaturfesten, nicht rostenden Stahl verwendet, also ein Blech geringer Masse und damit geringer Wärmekapazität. Die Dotierung einer durchgehenden Teilfläche mit Palladium wird nach der Herstellung der Platindotierung vorgenommen. Um die Oberfläche des Katalysatorblechs zu vergrößern, wird vor dem Aufbringen des Platins eine Zwischenschicht (Wash Coat Al₂O₃) aufgetragen. Durch die Beschichtung mit Wash Coat wird die geometrische Oberfläche um den Faktor von ca. 5000 erhöht (BET-Oberfläche). Auf dieser hohen spezifischen Oberfläche des Wash Coats werden die Platin-Kristalle (< 50 Angström) fein verteilt während verschiedener Fertigungsschritte, vorzugsweise Wärmebehandlungsschritte, fixiert. Lokal begrenzt erfolgt nun die Aufbringung der Palladiumdotierung mit hoher Dichte, so daß durch die mikroskopische Nähe der Palladium-Kristalle bzw. auch durch Überdeckung von Platin-Kristallen die selbstanlaufende Reaktion entsprechend unterstützt werden kann. Die Katalysatorsysteme 10 haben bevorzugt eine Dicke von weniger als 0,2 mm.

Der Palladium-Katalysator wird streifenförmig (vgl. Zeichen 14) an der Anströmkante oder streifenförmig im unteren Drittel des Trägerblechs konzentriert und gegen die Strömungsrichtung aufgebracht. Die Fläche der örtlich begrenzten Beschichtung beträgt allgemein weniger als 10%. Von den Palladium-Zentren aus, die bei geringen Temperaturen die katalytische Reaktion zünden, wird die Reaktion des gesamten Einzelblechs gestartet. Der Wärmetransport erfolgt hierbei besonders günstig direkt über einen gemeinsamen metallischen Träger 24, 26 sowie über die Kornschicht an den benachbarten Platin-Katalysator-Kornbereich. Durch die Aufheizung der Platin-Kristalle werden aktivitätsmindernde Stoffe vom Platin-Katalysator desorbiert, so daß der katalytische Zündpunkt des Platin-Katalysators wesentlich früher erfolgt.

Die Desorption von aktivitätsmindernden Stoffen pflanzt sich kettenförmig über das gesamte Katalysatorregister fort. Nach dem Start des gesamten Katalysatorregisters kann der Palladium-Katalysator, der eine geringere Temperaturstabilität gegenüber Platin hat, an Aktivität verlieren (z.B. durch CO-Sorption), ohne daß die Platin-Aktivität hiervon beeinflußt wird. Auch eine völlige Deaktivierung des Palladium-Katalysators ist tolerierbar. Er wirkt dann als Opferkatalysator.

Die Frühstartfähigkeit insbesondere bei feuchten Umgebungsbedingungen kann, wie bereits oben beschrieben, durch die limitierte Beschichtung des Platin-dotierten Streifens mit Teflon verbessert werden.

## Patentansprüche

1. Katalysatorsystem (10) zur Rekombination von Wasserstoff und/oder Kohlenmonoxid mit Sauerstoff mit einem metallischen Trägerblech, das mit katalytischem Edelmetall (13, 15) beschichtet ist, insbesondere für ein Kernkraftwerk,
**dadurch gekennzeichnet, daß** das Trägerblech gut wärmeleitend ausgebildet sowie in einer ersten Zone (12) mit einem ersten katalytischen Edelmetall (13) und in einer zweiten Zone (14) mit einem zweiten katalytischen Edelmetall (15) beschichtet ist, wobei die erste und die zweite Zone (12, 14) bevorzugt auf derselben Seite des Trägerblechs liegen.

2. Katalysatorsystem (10) nach Anspruch 1,
**dadurch gekennzeichnet, daß** das zweite Edelmetall (15) eine niedrigere Reaktionstemperatur besitzt als das erste Edelmetall (13).

3. Katalysatorsystem (10) nach Anspruch 1 oder 2,
**dadurch gekennzeichnet, daß** das erste Edelmetall (13) giftresistenter ist als das zweite Edelmetall (15).

4. Katalysatorsystem (10) nach einem der Ansprüche 1 bis 3,
**dadurch gekennzeichnet, daß** das erste Edelmetall (13) Platin und das zweite Edelmetall (15) vorzugsweise Palladium ist.

5. Katalysatorsystem (10) nach einem der Ansprüche 1 bis 4,
**dadurch gekennzeichnet, daß** das Trägerblech mit einer weiteren katalytischen Schicht versehen ist, die insbesondere Kupfer (Cu) oder Kupferoxid (CuO) umfaßt.

6. Katalysatorsystem (10) nach einem der Ansprüche 1 bis 5,
**dadurch gekennzeichnet, daß** das Trägerblech aus einem nicht-rostenden Edelstahl besteht.

7. Katalysatorsystem (10) nach einem der Ansprüche 1 bis 6,
**dadurch gekennzeichnet, daß** das erste und/oder das zweite katalytische Edelmetall (13, 15) mit Hilfe einer Haftvermittlerschicht und/oder einer Zwischenschicht auf dem Trägerblech aufgetragen ist.

8. Katalysatorsystem (10) nach einem der Ansprüche 1 bis 7,
**dadurch gekennzeichnet, daß** die erste. Zone (12) viel größer ist als die zweite Zone (14).

9. Katalysatorsystem (10) nach einem der Ansprüche 1 bis 8, insbesondere nach Anspruch 4,
**dadurch gekennzeichnet, daß** die aufgebrachte Masse des ersten Edelmetalls (13) mehr als 75% der aufgebrachten Masse des zweiten Edelmetalls (15) ist.

10. Katalysatorsystem (10) nach einem der Ansprüche 1 bis 9,
**dadurch gekennzeichnet, daß** das Trägerblech als ebene Platte ausgebildet ist.

11. Katalysatorsystem (10) nach einem der Ansprüche 1 bis 10, wobei diese einem Gasstrom (6), der Wasserstoff und/oder Kohlenmonoxid sowie Sauerstoff enthält, aussetzbar ist,
**dadurch gekennzeichnet, daß** das erste Edelmetall (13) in einer ersten Zone (12), die dem Gasstrom (6) zugewandt ist, und daß das zweite Edelmetall (15) in einer zweiten Zone (14), die dem Gasstrom (6) abgewandt ist, auf dem Trägerblech aufgebracht ist.

12. Katalysatorsystem (10) nach einem der Ansprüche 1 bis 11,
**dadurch gekennzeichnet, daß** die zweite Zone (14) ein Streifen ist, der etwa 5 bis 20%, insbesondere weniger als 10%, der Fläche der ersten Zone (12) ausmacht.

13. Katalysatorsystem (10) nach einem der Ansprüche 1 bis 12,
**dadurch gekennzeichnet, daß** die Vorderseite und die Rückseite des Trägerblechs in gleicher Weise beschichtet sind.

14. Katalysatorsystem (10) nach einem der Ansprüche 1 bis 13,
**dadurch gekennzeichnet, daß** eine Teflonbeschichtung auf der zweiten Zone (14) vorgesehen ist.

15. Rekombinationseinrichtung zur Rekombination von Wasserstoff und/oder Kohlenmonoxid mit Sauerstoff, **gekennzeichnet durch** mindestens ein Katalysatorsystem (10) nach einem der Ansprüche 1 bis 14.

16. Rekombinationseinrichtung nach Anspruch 15, **gekennzeichnet durch** ein Gehäuse (2, 4) zur Aufnahme mindestens eines Katalysatorsystems (10).

17. Rekombinationseinrichtung nach Anspruch 15 oder 16,
**dadurch gekennzeichnet, daß** mehrere gleichartige Katalysatorsysteme (10), insbesondere parallel zueinander, in einer Halterung (24) mit gutem Wärmeleitungsvermögen festgehalten sind.

18. Rekombinationseinrichtung nach Anspruch 17,
**dadurch gekennzeichnet, daß** die Katalysatorsysteme (10) im Bereich ihrer zweiten Zone (14) in der Halterung (24, 26) festgehalten sind.

19. Rekombinationseinrichtung nach Anspruch 17 oder 18,
**dadurch gekennzeichnet, daß** die Halterung (24, 26) mit einer Außenwand (20, 22) verbunden ist.

20. Rekombinationseinrichtung nach einem der Ansprüche 14 bis 19, **dadurch gekennzeichnet, daß** das Katalysatorsystem (10) über eine Isolierung (28, 30, 32; 34, 36, 38) mit einer Außenwand (20, 22) verbunden ist.

21. Rekombinationseinrichtung nach einem der Ansprüche 14 bis 20, **dadurch gekennzeichnet, daß** eine Mehrzahl gleicher Katalysatorsysteme (10) in einem Einschub (4) untergebracht ist.

22. Rekombinationseinrichtung nach Anspruch 21,
**dadurch gekennzeichnet, daß** die Katalysatorsysteme (10) plattenförmig ausgebildet sind, jeweils eine Gesamtdicke von 0,2 mm oder weniger besitzen und einen gegenseitigen Abstand von weniger als 20 mm, vorzugsweise etwa 10 mm, aufweisen.

23. Verfahren zum Betrieb eines Katalysatorsystems nach einem der Ansprüche 1 bis 14 oder einer Rekombinationseinrichtung nach einem der Ansprüche 15 bis 22,
**dadurch gekennzeichnet, daß** ein Gasstrom (6), der möglicherweise Wasserstoff und/oder Kohlenmonoxid sowie Sauerstoff enthält, in der zweiten Zone (14) zunächst mit dem weiteren katalytischen Edelmetall (15) und danach in der ersten Zone (12) mit dem ersten katalytischen Edelmetall (13) in Kontakt gebracht wird.

## Claims

1. A catalyst system (10) for the recombination of hydrogen and/or carbon monoxide with oxygen with a metallic support sheet which is coated with catalytic noble metal (13, 15), in particular for a nuclear power station, **characterised in that** the support sheet is designed to conduct heat well and is coated in a first zone (12) with a first catalytic noble metal (13) and in a second zone (14) with a second catalytic noble metal (15), wherein the first and second zones (12, 14) are preferably located on the same face of the support sheet.

2. A catalyst system (10) according to Claim 1, **characterised in that** the second noble metal (15) has a lower reaction temperature than the first noble metal (13).

3. A catalyst system (10) according to Claim 1 or 2, **characterised in that** the first noble metal (13) is more resistant to poisoning than the second noble metal (15).

4. A catalyst system (10) according to one of Claims 1 to 3, **characterised in that** the first noble metal (13) is platinum and the second noble metal (15) is preferably palladium.

5. A catalyst system (10) according to one of Claims 1 to 4, **characterised in that** the support sheet is provided with another catalytic layer which contains in particular copper (Cu) or copper oxide (CuO).

6. A catalyst system (10) according to one of Claims 1 to 5, **characterised in that** the support sheet consists of non-rusting stainless steel.

7. A catalyst system (10) according to one of Claims 1 to 6, **characterised in that** the first and/or the second catalytic noble metal (13, 15) is applied to the support sheet with the aid of an adhesion promoting layer and/or an intermediate layer.

8. A catalyst system (10) according to one of Claims 1 to 7, **characterised in that** the first zone (12) is much larger than the second zone (14).

9. A catalyst system (10) according to one of Claims 1 to 8, in particular according to Claim 4, **characterised in that** the weight of first noble metal (13) applied is more than 75 % of the weight of second noble metal (15) applied.

10. A catalyst system (10) according to one of Claims 1 to 9, **characterised in that** the support sheet is designed as a flat plate.

11. A catalyst system (10) according to one of Claims 1 to 10, wherein this is exposable to a gas stream (6) which contains hydrogen and/or carbon monoxide and oxygen, **characterised in that** the first noble metal (13) is applied to the support sheet in a first zone (12) which is turned towards the flow of gas (6) and that the second noble metal (15) is applied to the support sheet in a second zone (14) which is turned away from the flow of gas (6).

12. A catalyst system (10) according to one of Claims 1 to 11, **characterised in that** the second zone (14) is a stripe which constitutes about 5 to 20 %, in particular less than 10 % of the area of the first zone (12).

13. A catalyst system (10) according to one of Claims 1 to 12, **characterised in that** the front face and the rear face of the support sheet are coated in the same way.

14. A catalyst system (10) according to one of Claims 1 to 13, **characterised in that** a Teflon coating is provided on the second zone (14).

15. A recombination device for the recombination of hydrogen and/or carbon monoxide with oxygen, **characterised by** at least one catalyst system (10) according to one of Claims 1 to 14.

16. A recombination device according to Claim 15, **characterised by** a housing (2, 4) for accommodating at least one catalyst system (10).

17. A recombination device according to Claim 15 or 16, **characterised in that** several catalyst systems (10) of the same type are fixed, in particular in parallel with each other, in a holder (24) with high thermal conductivity.

18. A recombination device according to Claim 17, **characterised in that** the catalyst systems (10) are fixed in the holder (24, 26) in the region of their second zones (14).

19. A recombination device according to Claim 17 or 18, **characterised in that** the holder (24, 26) is connected to an external wall (20, 22).

20. A recombination device according to one of Claims 14 to 19, **characterised in that** the catalyst system (10) is connected to the external wall (20, 22) via insulation (28, 30, 32; 34, 36, 38).

21. A recombination device according to one of Claims 14 to 20, **characterised in that** a plurality of identical catalyst systems (10) is located in one insert (4).

22. A recombination device according to Claim 21, **characterised in that** the catalyst systems (10) are designed in the form of plates, each having a total thickness of 0.2 mm or less and positioned at a common spacing of less than 20 mm, preferably about 10 mm.

23. A process for operating a catalyst system according to one of Claims 1 to 14 or a recombination device according to one of Claims 15 to 22, **characterised in that** a stream of gas (6) which contains possibly hydrogen and/or carbon monoxide as well as oxygen, is brought into contact first with the further catalytic noble metal (15) in the second zone (14) and then with the first catalytic noble metal (13) in the first zone (12).

## Revendications

1. Système (10) de catalyseur pour recombiner de l'hydrogène et/ou du monoxyde de carbone à de l'oxygène, comprenant une tôle métallique servant de support et revêtu d'un métal (13, 15) précieux catalytique, notamment pour une centrale nucléaire, **caractérisé en ce que** la tôle servant de support est constituée de manière à bien conduire la chaleur et est revêtue dans une première zone (12) d'un premier métal (13) précieux catalytique et dans une deuxième zone (14) d'un deuxième métal (15) précieux catalytique, la première et la deuxième zone (12, 14) étant de préférence sur la même face de la tôle servant de support.

2. Système (10) de catalyseur suivant la revendication 1, **caractérisé en ce que** le deuxième métal (15) précieux a une température de réaction plus basse que le premier métal (13) précieux.

3. Système (10) de catalyseur suivant la revendication 1 ou 2, **caractérisé en ce que** le premier métal (13) précieux résiste mieux à l'empoisonnement que le deuxième métal (15) précieux.

4. Système (10) de catalyseur suivant l'une des revendications 1 à 3, **caractérisé en ce que** le premier métal (13) précieux est le platine, et le deuxième métal (15) précieux est de préférence le palladium.

5. Système (10) de catalyseur suivant l'une des revendications 1 à 4, **caractérisé en ce que** la tôle servant de support est munie d'une autre couche catalytique qui comprend notamment du cuivre (Cu) ou de l'oxyde de cuivre (CuO).

6. Système (10) de catalyseur suivant l'une des revendications 1 à 5, **caractérisé en ce que** la tôle servant de support est en un acier fin inoxydable.

7. Système (10) de catalyseur suivant l'une des revendications 1 à 6, **caractérisé en ce que** le premier et/ou le second métal (13, 15) précieux catalytique est déposé sur la tôle servant de support à l'aide d'une couche d'adhésif et/ou d'une couche intermédiaire.

8. Système (10) de catalyseur suivant l'une des revendications 1 à 7, **caractérisé en ce que** la première zone (12) est bien plus grande que la deuxième zone (14).

9. Système (10) de catalyseur suivant l'une des revendications 1 à 8, notamment suivant la revendication 4, **caractérisé en ce que** la masse déposée du premier métal (13) précieux représente plus de 75 % de la masse déposée du deuxième métal (15) précieux.

10. Système (10) de catalyseur suivant l'une des revendications 1 à 9, **caractérisé en ce que** la tôle servant de support est constituée sous la forme d'une plaque plane.

11. Système (10) de catalyseur suivant l'une des revendications 1 à 10, qui peut être exposé à un courant (6) gazeux qui contient de l'hydrogène et/ou du monoxyde de carbone ainsi que de l'oxygène, **caractérisé en ce que** le premier métal (13) précieux est déposé sur la tôle servant de support dans une première zone (12) qui est tournée vers le courant (6) gazeux, et **en ce que** le deuxième métal (15) précieux est déposé sur la tôle servant de support dans une deuxième zone (14) qui est éloignée du courant (6) gazeux.

12. Système (10) de catalyseur suivant l'une des revendications 1 à 11, **caractérisé en ce que** la deuxième zone (14) est une bande qui représente environ de 5 à 20 % et notamment, moins de 10 % de la surface de la première zone (12).

13. Système (10) de catalyseur suivant l'une des revendications 1 à 12, **caractérisé en ce que** la face avant et la face arrière de la tôle servant de support sont revêtues de la même façon.

14. Système (10) de catalyseur suivant l'une des revendications 1 à 13, **caractérisé en ce qu'**il est prévu un revêtement de Teflon sur la deuxième zone (14).

15. Dispositif de recombinaison pour faire se recombiner de l'hydrogène et/ou du monoxyde de carbone à de l'oxygène, **caractérisé par** au moins un système (10) de catalyseur suivant l'une des revendications 1 à 14.

16. Dispositif de recombinaison suivant la revendication 15, **caractérisé par** une enveloppe (2, 4) de réception d'au moins un système (10) de catalyseur.

17. Dispositif de recombinaison suivant la revendication 15 ou 16, **caractérisé en ce que** plusieurs systèmes (10) de catalyseur de même type sont fixés en étant notamment parallèles entre eux, dans une fixation (14) ayant un bon pouvoir de conduction de la chaleur.

18. Dispositif de recombinaison suivant la revendication 17, **caractérisé en ce que** les systèmes (10) de catalyseur sont fixés dans la région de leur deuxième zone (14) à la fixation (24, 26).

19. Dispositif de recombinaison suivant la revendication 17 ou 18, **caractérisé en ce que** la fixation (24, 26) est reliée à une paroi (20, 22) extérieure.

20. Dispositif de recombinaison suivant l'une des revendications 14 à 19, **caractérisé en ce que** le système (10) de catalyseur est relié à une paroi (20, 22) extérieure par une isolation (28, 30, 32, 34, 36, 38).

21. Dispositif de recombinaison suivant l'une des revendications 14 à 20, **caractérisé en ce qu'**une multiplicité de systèmes (10) de catalyseur identiques est logée dans un tiroir (4).

22. Dispositif de recombinaison suivant la revendication 21, **caractérisé en ce que** les systèmes de catalyseur sont constitués sous la forme de plaque, ont respectivement une épaisseur totale de 0,2 mm ou de moins de 0,2 mm et sont à un intervalle mutuel de moins de 20 mm, de préférence de 10 mm environ.

23. Procédé pour faire fonctionner un système de catalyseur suivant l'une des revendications 1 à 14 ou un dispositif de recombinaison suivant l'une des revendications 15 à 22, **caractérisé en ce qu'**il consiste à mettre un courant (6) gazeux qui contient éventuellement de l'hydrogène et/ou du monoxyde de carbone ainsi que de l'oxygène, en contact dans la deuxième zone (14) d'abord avec l'autre métal (15) précieux catalytique et ensuite, dans la première zone (12) avec le premier métal (13) précieux catalytique.
